(19) Europäisches Patentamt
European Patent Office
Office européen des brevets

(11) **EP 4 090 027 A1**

(12) **EUROPEAN PATENT APPLICATION**
published in accordance with Art. 153(4) EPC

(43) Date of publication:
**16.11.2022 Bulletin 2022/46**

(51) International Patent Classification (IPC):
*H04N 19/53* (2014.01)      *H04N 19/573* (2014.01)
*H04N 19/105* (2014.01)      *H04N 19/82* (2014.01)
*H04N 19/70* (2014.01)      *H04N 19/176* (2014.01)

(21) Application number: 21738420.5

(22) Date of filing: 06.01.2021

(52) Cooperative Patent Classification (CPC):
H04N 19/105; H04N 19/176; H04N 19/53;
H04N 19/573; H04N 19/70; H04N 19/82

(86) International application number:
**PCT/KR2021/000109**

(87) International publication number:
**WO 2021/141372 (15.07.2021 Gazette 2021/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.01.2020 KR 20200001674
06.01.2020 KR 20200001675**

(71) Applicants:
• **HYUNDAI MOTOR COMPANY
Seoul 06797 (KR)**
• **Kia Corporation
Seocho-gu
Seoul 06797 (KR)**

• **Kwangwoon University
Industry-Academic Collaboration Foundation
Seoul 01897 (KR)**

(72) Inventors:
• **SIM, Dong Gyu
Seoul 01901 (KR)**
• **PARK, Sea Nae
Seoul 01898 (KR)**
• **CHOI, Han Sol
Dongducheon-si, Gyeonggi-do 11342 (KR)**
• **PARK, Seung Wook
Yongin-si, Gyeonggi-do 16803 (KR)**
• **LIM, Wha Pyeong
Hwaseong-si, Gyeonggi-do 18271 (KR)**

(74) Representative: **Hoffmann Eitle
Patent- und Rechtsanwälte PartmbB
Arabellastraße 30
81925 München (DE)**

(54) **IMAGE ENCODING AND DECODING BASED ON REFERENCE PICTURE HAVING DIFFERENT RESOLUTION**

(57)      Disclosed is a method for decoding a current block in a current picture included in a high-level layer performed based on a reference picture included in a low-level layer and having a different resolution. A prediction mode for the current block, a decoded residual signal, and decoding information for the current block, are obtained. When the prediction mode is the inter-prediction, a prediction signal for the current block is generated based on the decoding information. A reconstructed block is then generated by adding the prediction signal to the residual signal. Filtering is then performed for correcting the different resolution that is applied to a reference block included in the reference picture such that the different resolution matches a resolution of the current block.

EP 4 090 027 A1

```
                        ( Start )
                            │
                            ▼
        ┌──────────────────────────────────────┐
        │    Determine constraint conditions for │──S700
        │  reference picture index and motion vector │
        └──────────────────────────────────────┘
                            │
                            ▼
        ┌──────────────────────────────────────┐
        │  Generate information on reference picture index │──S702
        └──────────────────────────────────────┘
                            │
                            ▼
        ┌──────────────────────────────────────┐
        │     Generate information on motion vector │──S704
        └──────────────────────────────────────┘
                            │
                            ▼
        ┌──────────────────────────────────────┐
        │       Generate first prediction signal │──S706
        └──────────────────────────────────────┘
                            │
                            ▼
        ┌──────────────────────────────────────┐
        │      Apply resolution correction filtering │──S708
        └──────────────────────────────────────┘
                            │
                            ▼
        ┌──────────────────────────────────────┐
        │      Generate second prediction signal │──S710
        └──────────────────────────────────────┘
                            │
                            ▼
        ┌──────────────────────────────────────┐
        │        Generate reconstructed block │──S712
        └──────────────────────────────────────┘
                            │
                            ▼
                        ( End )
```

# FIG. 7

## Description

### CROSS-REFERENCE TO RELATED APPLICATIONS

This application is a U.S. national phase of International Application No. PCT/KR2021/000109, filed on January 6, 2021, which claims priority to Korean Patent Application No. 10-2020-0001674, filed on January 6, 2020, Korean Patent Application No. 10-2020-0001675, filed on January 6, 2020, and Korean Patent Application No. 10-2021-0001214, filed on January 6, 2021, the entire contents of each of which are incorporated herein by reference.

### TECHNICAL FIELD

The present disclosure relates to video encoding and decoding, and more specifically, to a video encoding and decoding method for improving encoding/decoding efficiency by referring to a reference picture having a different resolution in consideration of the different resolution before reference.

### BACKGROUND

The statements in this section merely provide background information related to the present disclosure and do not necessarily constitute prior art.

Since the volume of video data is larger than that of voice data or still image data, storing or transmitting video data without processing for compression requires a lot of hardware resources, including memory.

Accordingly, in storing or transmitting video data, the video data is generally compressed using an encoder so as to be stored or transmitted. Then, a decoder receives the compressed video data, and decompresses and reproduces the video data. Compression techniques for such video include H.264/AVC and High Efficiency Video Coding (HEVC), which improves coding efficiency over H.264/AVC by about 40%.

However, the picture size, resolution, and frame rate are gradually increasing, and the amount of data to be encoded is also increasing accordingly. Accordingly, a new compression technique having better encoding efficiency and higher image quality than the existing compression technique is required.

In video encoding/decoding, a current picture may be encoded/decoded with reference to a previously decoded picture in order to improve encoding/decoding efficiency. For example, in the case of video encoding/decoding for multiple layers or multiple views having different resolutions, the current picture and a reference picture may have different resolutions. In this case, a method of encoding/decoding the current picture in consideration of the resolution of the reference picture is required.

## SUMMARY

In the present disclosure, in video encoding and decoding using a reference picture having a different resolution, inter-prediction or intra-prediction is performed on the current picture in consideration of the resolution of the reference picture in order to improve encoding/decoding efficiency. The present disclosure provides a video encoding/decoding method for decoding a motion vector for a current picture by referring to a motion vector of a reference picture having a different resolution from the current picture during inter-prediction.

According to an embodiment of the present disclosure, a video decoding method for a current block in a current block in a current picture included in a high-level layer, performed by a video decoding apparatus based on a reference picture included in a low-level layer and having a different resolution, comprises: obtaining a prediction mode for the current block; obtaining a decoded residual signal and decoding information for the current block, wherein the decoding information includes a reference picture index and a motion vector for the reference picture when the prediction mode is inter-prediction and includes the reference picture and reference positions in the reference picture when the prediction mode is intra-prediction; generating a prediction signal for the current block based on the decoding information when the prediction mode is the inter-prediction; and generating a reconstructed block by adding the prediction signal to the residual signal, wherein, when the inter-prediction is used, filtering for correcting the different resolution is applied to a reference block included in the reference picture such that the different resolution matches a resolution of the current block.

According to another embodiment of the present disclosure, a video encoding method for a current block included in a high-level layer, performed by a video encoding apparatus based on a reference picture included in a low-level layer and having a different resolution, comprises: generating a prediction mode for the current block; obtaining encoding information on the current block, wherein the encoding information includes a reference picture index and a motion vector for the reference picture when the prediction mode is inter-prediction and includes the reference picture and a reference position in the reference picture when the prediction mode is intra-prediction; generating a prediction signal for the current block based on the encoding information when the prediction mode is the inter-prediction; and generating a residual signal by subtracting the prediction signal from the current block, wherein, when the inter-prediction is used, filtering for correcting the different resolution is applied to a reference block included in the reference picture such that the different resolution matches a resolution of the current block.

Embodiments of the present disclosure improve encoding/decoding efficiency by performing inter-prediction or intra-prediction on a current picture in consideration of the resolution of a reference picture in video encoding and decoding using the reference picture having a different resolution.

Furthermore, embodiments of the present disclosure improve encoding/decoding efficiency by decoding a motion vector with reference to a motion vector of a reference picture having a different resolution from the current picture in inter-prediction.

## BRIEF DESCRIPTION OF THE DRAWINGS

In order that the disclosure may be well understood, there will now be described various forms thereof, given by way of example, reference being made to the accompanying drawings, in which:

FIG. 1 is a block diagram of a video encoding apparatus capable of implementing the techniques of the present disclosure;

FIG. 2 is a diagram illustrating block partitioning using a QuadTree plus BinaryTree TernaryTree (QTBTTT) structure;

FIGS. 3A and 3B are diagrams illustrating a plurality of intra-prediction modes including wide-angle intra-prediction modes;

FIG. 4 is a diagram illustrating neighboring blocks around a current block;

FIG. 5 is a block diagram of a video decoding apparatus capable of implementing the techniques of the present disclosure;

FIG. 6 is a diagram conceptually illustrating a decoding process for a multi-layer having a different resolution according to an embodiment of the present disclosure;

FIG. 7 is a schematic flowchart of a video decoding method using a reference picture having a different resolution according to an embodiment of the present disclosure;

FIG. 8 is a diagram conceptually illustrating a process for determining an intra-prediction mode using a reference picture having a different resolution according to an embodiment of the present disclosure;

FIG. 9 is a diagram conceptually illustrating intra/inter mixed prediction using a reference picture having a different resolution according to an embodiment of the present disclosure;

FIG. 10 is a diagram conceptually illustrating inter-component reference using a reference picture having a different resolution according to an embodiment of the present disclosure;

FIG. 11 is a diagram illustrating a hierarchical split structure of a current picture and a motion vector reference picture according to an embodiment of the present disclosure; and

FIG. 12 is a flowchart illustrating a method of deriving a motion vector and generating a prediction block using a reference picture having a different resolution according to an embodiment of the present disclosure.

closure.

The drawings described herein are for illustration purposes only and are not intended to limit the scope of the present disclosure in any way.

## DETAILED DESCRIPTION

Hereinafter, embodiments of the present disclosure are described in detail with reference to the accompanying drawings. It should be noted that, in adding reference numerals to the constituent elements in the respective drawings, like reference numerals designate like elements, although the elements are shown in different drawings. Further, in the following description of the present disclosure, a detailed description of known functions and configurations incorporated herein are omitted to avoid obscuring the subject matter of the present disclosure. When a component, device, element, or the like of the present disclosure is described as having a purpose or performing an operation, function, or the like, the component, device, or element should be considered herein as being "configured to" meet that purpose or to perform that operation or function.

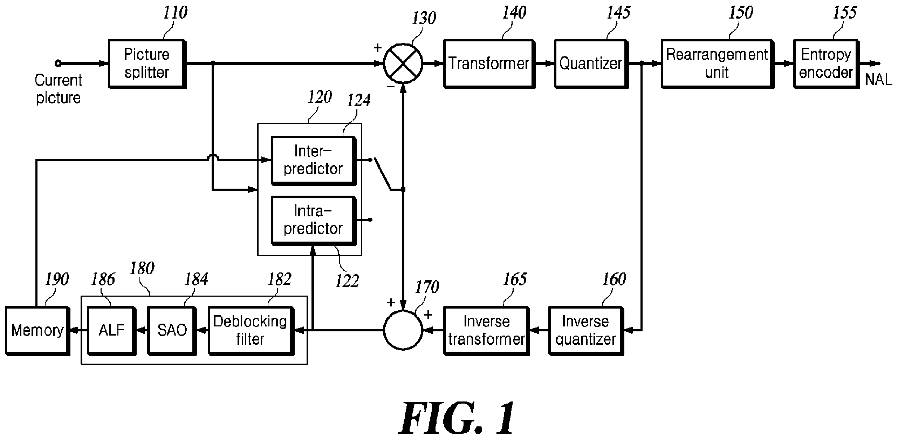

FIG. 1 is a block diagram of a video encoding apparatus capable of implementing the techniques of the present disclosure. Hereinafter, a video encoding apparatus and elements of the apparatus are described with reference to FIG. 1.

The video encoding apparatus includes a block splitter 110, a predictor 120, a subtractor 130, a transformer 140, a quantizer 145, a rearrangement unit 150, an entropy encoder 155, an inverse quantizer 160, an inverse transformer 165, an adder 170, a loop filter unit 180, and a memory 190.

Each element of the video encoding apparatus may be implemented in hardware or software, or a combination of hardware and software. The functions of the respective elements may be implemented as software, and a microprocessor may be implemented to execute the software functions corresponding to the respective elements.

One video is composed of one or more sequences including a plurality of pictures. Each picture is split into a plurality of regions, and encoding is performed on each region. For example, one picture is split into one or more tiles or/and slices. Here, the one or more tiles may be defined as a tile group. Each tile or slice is split into one or more coding tree units (CTUs). Each CTU is split into one or more coding units (CUs) by a tree structure. Information applied to each CU is encoded as a syntax of the CU, and information applied to CUs included in one CTU in common is encoded as a syntax of the CTU. In addition, information applied to all blocks in one slice in common is encoded as a syntax of a slice header, and information applied to all blocks constituting one or more pictures is encoded in a picture parameter set (PPS) or a picture header. Furthermore, information a a sequence composed of a plurality of pictures refers to in common is encoded in a sequence parameter set (SPS). In addition, information applied to one tile or tile group in common may be encoded as a syntax of a tile or tile group header. The syntaxes included in the SPS, PPS, slice header, and tile or tile group header may be referred to as high-level syntaxes.

The block splitter 110 determines the size of a coding tree unit (CTU). Information about the size of the CTU (CTU size) is encoded as a syntax of the SPS or PPS and is transmitted to the video decoding apparatus.

The block splitter 110 splits each picture constituting the video into a plurality of CTUs having a predetermined size, and then recursively splits the CTUs using a tree structure. In the tree structure, a leaf node serves as a coding unit (CU), which is a basic unit of coding.

The tree structure may be a QuadTree (QT), in which a node (or parent node) is split into four sub-nodes (or child nodes) of the same size. The tree structure may additionally or alternatively be a BinaryTree (BT), in which a node is split into two sub-nodes. The tree structure may additionally or alternatively be a TernaryTree (TT), in which a node is split into three sub-nodes at a ratio of 1:2:1. The tree structure may be a structure formed by a combination of two or more of the QT structure, the BT structure, and the TT structure. For example, a QuadTree plus BinaryTree (QTBT) structure may be used, or a QuadTree plus BinaryTree TernaryTree (QTBTTT) structure may be used. Here, BTTT may be collectively referred to as a multiple-type tree (MTT).

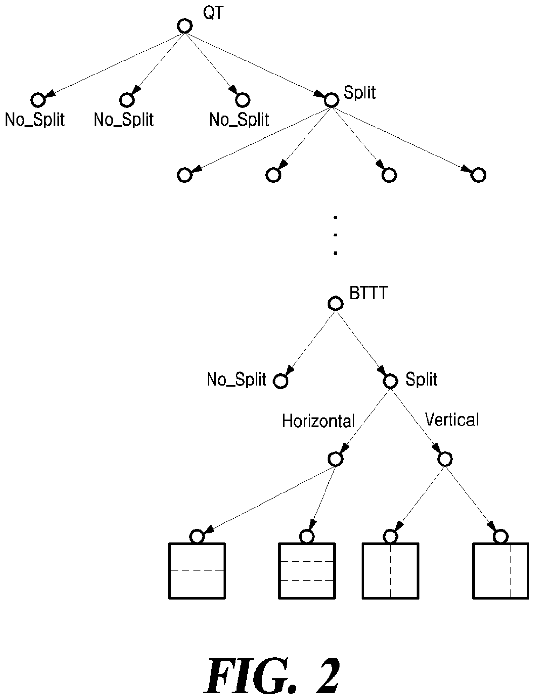

FIG. 2 shows a QTBTTT splitting tree structure. As shown in FIG. 2, a CTU may be initially split in the QT structure. The QT splitting may be repeated until the size of the splitting block reaches the minimum block size MinQTSize of a leaf node allowed in the QT. A first flag (QT_split_flag) indicating whether each node of the QT structure is split into four nodes of a lower layer is encoded by the entropy encoder 155 and signaled to the video decoding apparatus. When the leaf node of the QT is not larger than the maximum block size (MaxBTSize) of the root node allowed in the BT, it may be further split into one or more of the BT structure or the TT structure. The BT structure and/or the TT structure may have a plurality of splitting directions. For example, there may be two directions, namely, a direction in which a block of a node is horizontally split and a direction in which the block is vertically split. As shown in FIG. 2, when MTT splitting is started, a second flag (mtt_split_flag) indicating whether nodes are split, a flag indicating a splitting direction (vertical or horizontal) in the case of splitting, and/or a flag indicating a splitting type (Binary or Ternary) are encoded by the entropy encoder 155 and signaled to the video decoding apparatus.

Alternatively, prior to encoding the first flag (QT_split_flag) indicating whether each node is split into 4 nodes of a lower layer, a CU splitting flag (split_cu_flag) indicating whether the node is split may be encoded.

When the value of the CU split flag (split_cu_flag) indicates that splitting is not performed, the block of the node becomes a leaf node in the splitting tree structure and serves a coding unit (CU), which is a basic unit of encoding. When the value of the CU split flag (split cuflag) indicates that splitting is performed, the video encoding apparatus starts encoding the flags in the manner described above, starting with the first flag.

When QTBT is used as another example of a tree structure, there may be two splitting types, which are a type of horizontally splitting a block into two blocks of the same size (i.e., symmetric horizontal splitting) and a type of vertically splitting a block into two blocks of the same size (i.e., symmetric vertical splitting). A split flag (split flag) indicating whether each node of the BT structure is split into block of a lower layer and splitting type information indicating the splitting type are encoded by the entropy encoder 155 and transmitted to the video decoding apparatus. There may be an additional type of splitting a block of a node into two asymmetric blocks. The asymmetric splitting type may include a type of splitting a block into two rectangular blocks at a size ratio of 1:3 or may include a type of diagonally splitting a block of a node.

CUs may have various sizes according to QTBT or QTBTTT splitting of a CTU. Hereinafter, a block corresponding to a CU (i.e., a leaf node of QTBTTT) to be encoded or decoded is referred to as a "current block." As QTBTTT splitting is employed, the shape of the current block may be square or rectangular.

The predictor 120 predicts the current block to generate a prediction block. The predictor 120 includes an intra-predictor 122 and an inter-predictor 124.

In general, each of current blocks in a picture may be predictively coded. In general, prediction of a current block can be performed using an intra-prediction technique (using data from the picture including the current block) or an inter-prediction technique (using data from a picture coded before the picture including the current block). Inter-prediction includes both unidirectional prediction and bidirectional prediction.

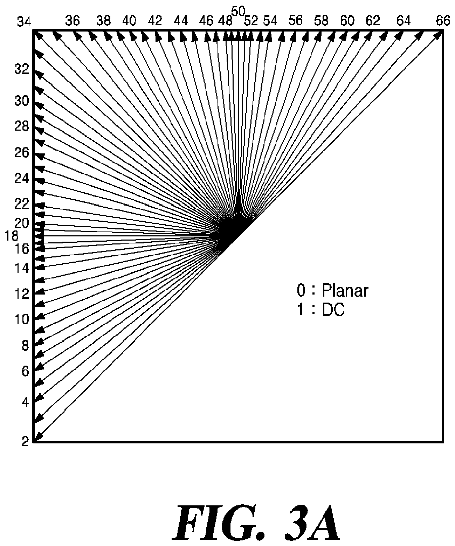

The intra-predictor 122 predicts pixels in a current block using pixels (reference pixels) located around the current block in a current picture including the current block. There is a plurality of intra-prediction modes according to a prediction direction. For example, as shown in FIG. 3A, the plurality of intra-prediction modes may include two nondirectional modes including a planar mode and a DC mode and 65 directional modes. Neighboring pixels to be used and a calculation formula are defined differently depending on each prediction mode.

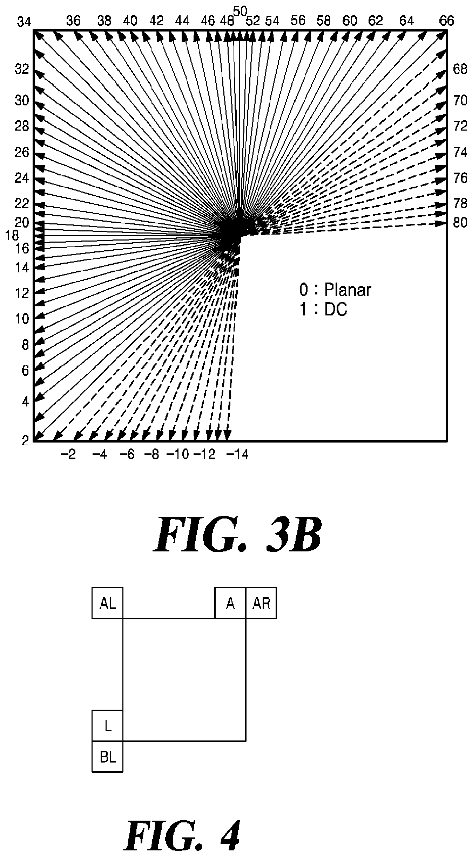

For efficient directional prediction of a rectangular-shaped current block, directional modes (intra-prediction modes #67 to #80 and #-1 to #-14) indicated by dotted arrows in FIG. 3b may be additionally used. These may be referred to as "wide angle intra-prediction modes". Arrows in FIG. 3B indicate corresponding reference samples used for prediction, not prediction directions. A prediction direction is opposite to a direction indicated by an arrow. The wide angle intra-prediction modes are modes in which a specific directional mode is predicted in the opposite direction without additional bit transmission when a current block is rectangular. In this case, among the wide angle intra-prediction modes, some wide angle intra-prediction modes available for the current block may be determined by the ratio of the width to the height of the rectangular current block. For example, wide angle intra-prediction modes having angles less than 45 degrees (intra-prediction modes #67 to #80) are available when the current block has a rectangular shape with a height less than the width, and wide angle intra-prediction modes having angles greater than -135 degrees (intra-prediction modes #-1 to #-14) are available when the current block has a rectangular shape with a width greater than the height.

The intra-predictor 122 may determine an intra-prediction mode to be used in encoding the current block. In some examples, the intra-predictor 122 may encode the current block using several intra-prediction modes and select an appropriate intra-prediction mode to use from the tested modes. For example, the intra-predictor 122 may calculate rate distortion values using rate-distortion analysis of several tested intra-prediction modes and may select an intra-prediction mode that has the best rate distortion characteristics among the tested modes.

The intra-predictor 122 selects one intra-prediction mode from among the plurality of intra-prediction modes and predicts the current block using neighboring pixels (reference pixel) and an equation determined according to the selected intra-prediction mode. Information about the selected intra-prediction mode is encoded by the entropy encoder 155 and transmitted to the video decoding apparatus.

The inter-predictor 124 generates a prediction block for the current block through a motion compensation. The inter-predictor 124 searches for a block most similar to the current block in a reference picture, which has been encoded and decoded earlier than the current picture. The inter-predictor 124 generates a prediction block for the current block using the searched block. Then, the inter-predictor generates a motion vector corresponding to a displacement between the current block in the current picture and the prediction block in the reference picture. In general, motion estimation is performed on a luma component, and a motion vector calculated based on the luma component is used for both the luma component and the chroma component. The motion information including information about the reference picture and information about the motion vector used to predict the current block is encoded by the entropy encoder 155 and transmitted to the video decoding apparatus.

The inter-predictor 124 may perform interpolation on a reference picture or a reference block in order to increase prediction accuracy. In other words, subsamples between two consecutive integer samples are interpolated by applying filter coefficients to a plurality of consecutive integer samples including the two integer samples. When the operation of searching for a block most similar to the current block is performed on the interpolated reference picture, the motion vector may be expressed at a precision level of fractional sample unit, not a precision level of integer sample unit. The precision or resolution of the motion vector may be set differently for each target region to be encoded, for example, each unit such as a slice, tile, CTU, or CU. When such an adaptive motion vector resolution is applied, information about motion vector resolution to be applied to each target region should be signaled for each target region. For example, when the target region is a CU, information about the motion vector resolution applied to each CU is signaled. As described in more detail below, the information about the motion vector resolution may be information indicating the precision of a motion vector difference.

The inter-predictor 124 may perform inter-prediction using bi-prediction, also referred to herein as bi-directional prediction. In bi-directional prediction, the inter-predictor 124 uses two reference pictures and two motion vectors representing block positions most similar to the current block in the respective reference pictures. The inter-predictor 124 selects a first reference picture and a second reference picture from reference picture list 0 (RefPicList0) and reference picture list 1 (RefPicList1), respectively, searches for blocks similar to the current block in the respective reference pictures, and generate a first reference block and a second reference block. Then, the inter-predictor 124 generates a prediction block for the current block by averaging or weighting the first reference block and the second reference block. The inter-predictor 124 transfers motion information including information about the two reference pictures and the two motion vectors used to predict the current block to the encoder 150. RefPicList0 may be composed of pictures preceding the current picture in display order among the reconstructed pictures, and RefPicList1 may be composed of pictures following the current picture in display order among the reconstructed pictures. However, embodiments are not limited thereto. For example, pre-reconstructed pictures following the current picture in display order may be further included in RefPicList0, and conversely, pre-reconstructed pictures preceding the current picture may be further included in RefPicList1.

Various methods may be used to minimize the number of bits required to encode the motion information. For example, when the reference picture and motion vector of the current block are the same as the reference picture and motion vector of a neighboring block, the motion information about the current block may be transmitted to the decoding apparatus by encoding information for identifying the neighboring block. This method is called a "merge mode." In the merge mode, the inter-predictor 124 selects a predetermined number of merge candidate blocks (hereinafter referred to as "merge candidates") from among the neighboring blocks of the current block.

As illustrated in FIG. 4, some or all of a left block L, an above block A, an above right block AR, a bottom left block BL, and an above left block AL, which are adjacent to the current block in the current picture, may be used as neighboring blocks for deriving merge candidates. In addition, a block located within a reference picture (which may be the same as or different from the reference picture used to predict the current block) other than the current picture in which the current block is located may be used as a merge candidate. For example, a co-located block that is at the same position as the current block or blocks adjacent to the co-located block in the reference picture may be additionally used as merge candidates.

The inter-predictor 124 configures a merge list including a predetermined number of merge candidates using such neighboring blocks. The inter-predictor 124 selects a merge candidate to be used as the motion information about the current block from among the merge candidates included in the merge list and generates merge index information for identifying the selected candidates. The generated merge index information is encoded by the encoder 155 and transmitted to the decoding apparatus.

Another method of encoding the motion information is an AMVP mode. In the AMVP mode, the inter-predictor 124 derives predicted motion vector candidates for the motion vector of the current block by using neighboring blocks of the current block. Some or all of the left block L, the above block A, the above right block AR, the bottom left block BL, and the above left block AL, which are adjacent to the current block in the current picture in FIG. 2, may be used as the neighboring blocks used to derive the predicted motion vector candidates. In addition, a block positioned within a reference picture (which may be the same as or different from the reference picture used to predict the current block) other than the current picture including the current block may be used as the neighboring blocks used to derive the predicted motion vector candidates. For example, a co-located block that is at the same position as the current block or blocks adjacent to the co-located block in the reference picture may be used.

The inter-predictor 124 derives predicted motion vector candidates using the motion vectors of the neighboring blocks and determines a predicted motion vector for the motion vector of the current block using the predicted motion vector candidates. Then, a motion vector difference is calculated by subtracting the predicted motion vector from the motion vector of the current block.

The predicted motion vector may be obtained by applying a predefined function (e.g., a function for calculating a median, an average, or the like) to the predicted motion vector candidates. In this case, the video decoding apparatus also knows the predefined function. Since the neighboring blocks used to derive the predicted motion vector candidates have already been encoded and decoded, the video decoding apparatus already knows the motion vectors of the neighboring blocks as well. Accordingly, the video encoding apparatus does not need to encode information for identifying the predicted motion vector candidates. Therefore, in this case, the information about the motion vector difference and the information about the reference picture used to predict the current block are encoded.

The predicted motion vector may be determined by selecting any one of the predicted motion vector candidates. In this case, information for identifying the selected predicted motion vector candidate is further encoded along with the information about the motion vector difference and the information about the reference picture which are to be used to predict the current block.

The subtractor 130 subtracts the prediction block generated by the intra-predictor 122 or the inter-predictor 124 from the current block to generate a residual block.

The transformer 140 transforms a residual signal in the residual block having pixel values in the spatial domain into transform coefficients in the frequency domain. The transformer 140 may transform residual signals in the residual block by using the entire size of the residual block as a transform unit, or may split the residual block into a plurality of sub-blocks and use the sub-blocks as transform units to perform transformation. Alternatively, the residual signals may be transformed by classifying sub-blocks as two sub-blocks, which are a transform region and a non-transform region, and using only the transform region sub-block as a transform unit. Here, the transform region sub-block may be one of two rectangular blocks having a size ratio of 1: 1 based on the horizontal axis (or vertical axis). In this case, a flag (cu_sbt_flag) indicating that only sub-blocks have been transformed, directional (vertical/horizontal) information (cu_sbt_horizontal_flag), and/or position information (cu_sbt_pos_flag) are/is encoded by the entropy encoder 155 and signaled to the video decoding apparatus. In addition, the transform region sub-block may have a size ratio of 1:3 based on the horizontal axis (or vertical axis). In this case, a flag (cu_sbt_quad_flag) for distinguishing the corresponding split is additionally encoded by the entropy encoder 155 and signaled to the video decoding apparatus.

The transformer 140 may transform the residual block in the horizontal direction and the vertical direction individually. For transformation, various types of transform functions or transform matrices may be used. For example, pairs of transform functions for horizontal transformation and vertical transformation may be defined as a multiple transform set (MTS). The transformer 140 may select one pair of transform functions having the best transformation efficiency in the MTS and transform the residual block in the horizontal and vertical directions, respectively. The information (mts_idx) on the transform function pair selected in the MTS is encoded by the entropy encoder 155 and signaled to the video decoding apparatus.

The quantizer 145 quantizes transform coefficients output from the transformer 140 using quantization parameters and outputs the quantized transform coefficients to the entropy encoder 155. For some blocks or frames, the quantizer 145 may directly quantize a related residual block without transformation. The quantizer 145 may apply different quantization coefficients (scaling values) according to the positions of the transform coefficients in a transform block. A matrix of quantized coefficients applied to the two-dimensionally arranged quantized transform coefficients may be encoded and signaled to the video decoding apparatus.

The rearrangement unit 150 may re-sort the coefficient values for the quantized residual value.

The rearrangement unit 150 may change the 2-dimensional array of coefficients into a 1-dimensional coefficient sequence through coefficient scanning. For example, the rearrangement unit 150 may scan coefficients from a DC coefficient to a coefficient in a high frequency region using a zig-zag scan or a diagonal scan to output a 1-dimensional coefficient sequence. Depending on the size of the transformer and the intra-prediction mode, a vertical scan, in which a two-dimensional array of coefficients is scanned in a column direction, or a horizontal scan, in which two-dimensional block-shaped coefficients are scanned in a row direction, may be used instead of the zig-zag scan. In other words, a scan mode to be used may be selected from among the zig-zag scan, the diagonal scan, the vertical scan and the horizontal scan according to the size of the transformer and the intra-prediction mode.

The entropy encoder 155 encodes the one-dimensional quantized transform coefficients output from the rearrangement unit 150 using uses various encoding techniques such as Context-based Adaptive Binary Arithmetic Code (CABAC) and exponential Golomb, to generate a bitstream.

The entropy encoder 155 encodes information, such as a CTU size, a CU split flag, a QT split flag, an MTT splitting type, and an MTT splitting direction, that is associated with block splitting, such that the video decoding apparatus may split the block in the same manner as in the video encoding apparatus. In addition, the entropy encoder 155 encodes information about a prediction type indicating whether the current block is encoded by intra-prediction or inter-prediction and encodes intra-prediction information (i.e., information about an intra-prediction mode) or inter-prediction information (e.g., a merge index for the merge mode, information about a reference picture index and a motion vector difference for the AMVP mode) according to the prediction type. The entropy encoder 155 also encodes information related to quantization, such as information about quantization parameters and information about a quantization matrix.

The inverse quantizer 160 inversely quantizes the quantized transform coefficients output from the quantizer 145 to generate transform coefficients. The inverse transformer 165 transforms the transform coefficients output from the inverse quantizer 160 from the frequency domain to the spatial domain and reconstructs the residual block.

The adder 170 adds the reconstructed residual block to the prediction block generated by the predictor 120 to reconstruct the current block. The samples in the reconstructed current block are used as reference samples in performing intra-prediction of a next block.

The loop filter unit 180 filters the reconstructed samples to reduce blocking artifacts, ringing artifacts, and blurring artifacts generated due to block-based prediction and transformation/quantization. The loop filter unit 180 may include at least one of a deblocking filter 182, a sample adaptive offset (SAO) filter 184, and an adaptive loop filter (ALF) 186.

The deblocking filter 180 filters the boundary between reconstructed blocks in order to remove blocking artifacts caused by block-by-block encoding/decoding, and the SAO filter 184 and the ALF 186 perform additional filtering on the deblocking-filtered image. The SAO filter 184 and the ALF 186 are filters used to compensate for a difference between a reconstructed pixel and an original pixel caused by lossy coding. The SAO filter 184 improves encoding efficiency as well as subjective image quality by applying an offset in units of CTUs. On the other hand, the ALF 186 performs block-by-block filtering and compensates for distortion by applying different filters according to the edge and a degree of change of the corresponding block. Information on filter coefficients to be used for the ALF may be encoded and signaled to the video decoding apparatus.

The reconstructed blocks filtered through the deblocking filter unit 182, the SAO filter 184 and the ALF 186 are stored in the memory 190. Once all blocks in one picture are reconstructed, the reconstructed picture may be used as a reference picture for inter-prediction of blocks in a picture to be encoded next.

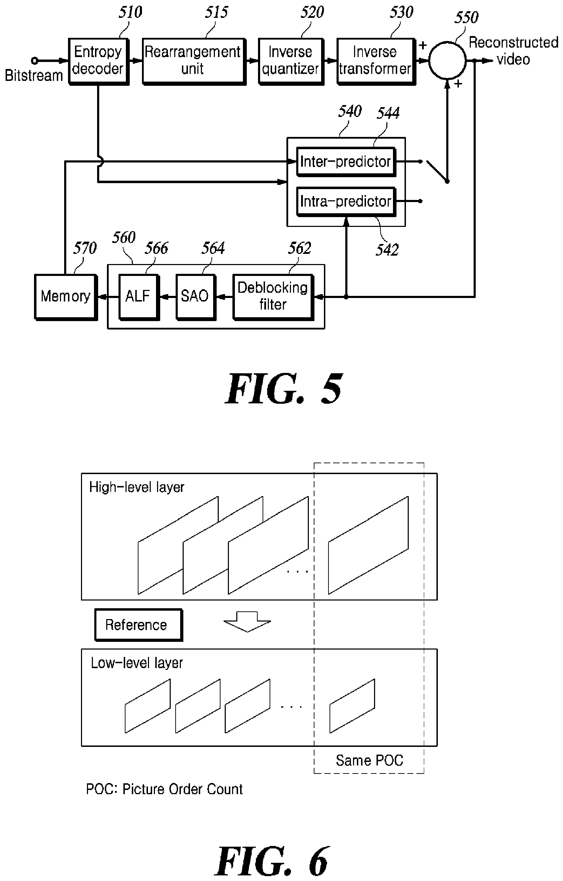

FIG. 5 is a block diagram of a video decoding apparatus capable of implementing the techniques of the present disclosure. Hereinafter, the video decoding apparatus and elements of the apparatus are described with reference to FIG. 5.

The video decoding apparatus may include an entropy decoder 510, a rearrangement unit 515, an inverse quantizer 520, an inverse transformer 530, a predictor 540, an adder 550, a loop filter unit 560, and a memory 570.

Similar to the video encoding apparatus of FIG. 1, each element of the video decoding apparatus may be implemented in hardware, software, or a combination of hardware and software. Further, the function of each element may be implemented in software, and the microprocessor may be implemented to execute the function of software corresponding to each element.

The entropy decoder 510 determines a current block to be decoded by decoding a bitstream generated by the video encoding apparatus and extracting information related to block splitting. The entropy decoder 510 also extracts prediction information and information about a residual signal, and the like required to reconstruct the current block.

The entropy decoder 510 extracts information about the CTU size from the sequence parameter set (SPS) or the picture parameter set (PPS), determines the size of the CTU, and splits a picture into CTUs of the determined size. Then, the decoder determines the CTU as the uppermost layer, i.e., the root node of a tree structure, and extracts splitting information about the CTU to split the CTU using the tree structure.

For example, when the CTU is split using a QTBTTT structure, a first flag (QT_split_flag) related to splitting of the QT is extracted to split each node into four nodes of a sub-layer. For a node corresponding to the leaf node of the QT, the second flag (MTT_split_flag) and information about a splitting direction (vertical/horizontal) and/or a splitting type (binary/ternary) related to the splitting of the MTT are extracted to split the corresponding leaf node in the MTT structure. Each node below the leaf node of QT is thereby recursively split in a BT or TT structure.

As another example, when a CTU is split using the QTBTTT structure, a CU split flag (split_cu_flag) indicating whether to split a CU may be extracted. When the corresponding block is split, the first flag (QT_split_flag) may be extracted. In the splitting operation, zero or more recursive MTT splitting may occur for each node after zero or more recursive QT splitting. For example, the CTU may directly undergo MTT splitting without the QT splitting, or undergo only QT splitting multiple times.

As another example, when the CTU is split using the QTBT structure, the first flag (QT_split_flag) related to QT splitting is extracted, and each node is split into four nodes of a lower layer. Then, a split flag (split flag) indicating whether a node corresponding to a leaf node of QT is further split in the BT and the splitting direction information are extracted.

Once the current block to be decoded is determined through splitting in the tree structure, the entropy decoder 510 extracts information about a prediction type indicating whether the current block is intra-predicted or inter-predicted. When the prediction type information indicates intra-prediction, the entropy decoder 510 extracts a syntax element for the intra-prediction information (intra-prediction mode) for the current block. When the prediction type information indicates inter-prediction, the entropy decoder 510 extracts a syntax element for the inter-prediction information, i.e., information indicating a motion vector and a reference picture referred to by the motion vector.

The entropy decoder 510 also extracts information about quantized transform coefficients of the current block as information related to quantization and information about residual signals.

The rearrangement unit 515 may change the sequence of the one-dimensional quantized transform coefficients entropy-decoded by the entropy decoder 510 to a 2-dimensional coefficient array (i.e., block) in a reverse order of the coefficient scanning performed by the video encoding apparatus.

The inverse quantizer 520 inversely quantizes the quantized transform coefficients using the quantization parameter. The inverse quantizer 520 may apply different quantization coefficients (scaling values) to the quantized transform coefficients arranged in two dimensions. The inverse quantizer 520 may perform inverse quantization by applying a matrix of quantization coefficients (scaling values) from the video encoding apparatus to a two-dimensional array of quantized transform coefficients.

The inverse transformer 530 inversely transforms the inversely quantized transform coefficients from the frequency domain to the spatial domain to reconstruct residual signals, thereby generating a reconstructed residual block for the current block.

In addition, when the inverse transformer 530 inversely transforms only a partial region (sub-block) of a transform block, the inverse transformer 530 extracts a flag (cu_sbt_flag) indicating that only the sub-block of the transform block has been transformed, sub-block directional (vertical/horizontal) information (cu_sbt_horizontal_flag), and/or sub-block position information (cu_sbt_pos_flag), inversely transforms the transform coefficients of the sub-block from the frequency domain into the spatial domain to reconstruct residual signals, and fills a region that is not inversely transformed as residual signals with a "0" to generate a final residual block for the current block.

In addition, when the MTS is applied, the inverse transformer 530 determines transform functions or transform matrices to be applied in the horizontal and vertical directions, respectively, using the MTS information (mts_idx) signaled from the video encoding apparatus. The inverse transformer 530 uses the determined transform functions to inversely transform the transform coefficients in the transform block in the horizontal and vertical directions.

The predictor 540 may include an intra-predictor 542 and an inter-predictor 544. The intra-predictor 542 is activated when the prediction type of the current block is intra-prediction, and the inter-predictor 544 is activated when the prediction type of the current block is inter-prediction.

The intra-predictor 542 determines an intra-prediction mode of the current block among a plurality of intra-prediction modes based on the syntax element for the intra-prediction mode extracted from the entropy decoder 510. The intra-predictor 542 predicts the current block using the reference samples around the current block according to the intra-prediction mode.

The inter-predictor 544 determines a motion vector of the current block and a reference picture referred to by the motion vector using the syntax element for the intra-prediction mode extracted from the entropy decoder 510. The inter-predictor 544 predicts the current block based on the motion vector and the reference picture.

The adder 550 reconstructs a current block by adding a residual block output from the inverse transformer to a prediction block output from the inter-predictor or the intra-predictor. Pixels in the reconstructed current block are used as reference pixels when a block to be decoded later is intra-predicted.

The loop filter unit 560 is an in-loop filter and may include a deblocking filter 562, an SAO filter 564, or an ALF 566. The deblocking filter 562 performs deblocking filtering on the boundary between reconstructed blocks in order to remove a blocking artifact caused by block-by-block decoding. The SAO filter 564 and the ALF 566 perform additional filtering on the reconstructed blocks after deblocking filtering to compensate for a difference between a reconstructed pixel and an original pixel caused by lossy coding. The filter coefficients of the ALF are determined using information about filter coefficients decoded from a bitstream.

The reconstructed blocks filtered through the deblocking filter 562, the SAO filter 564, and the ALF 566 are stored in the memory 570. When all blocks in one picture are reconstructed, the reconstructed picture is used as a reference picture for inter-prediction of blocks in a picture to be encoded later.

In embodiments, video encoding and decoding are performed as described above. More specifically, in video encoding and decoding using a reference picture having a different resolution, a current picture is encoded/decoded in consideration of the resolution of the reference picture in order to improve encoding/decoding efficiency. In addition, a video encoding/decoding method for decoding a motion vector for a current picture during inter-prediction may be performed by referring to a motion vector of a reference picture having a different resolution from the current picture.

In the following description according to the present disclosure, it is assumed that the memories 190 and 570 of the video encoding/decoding apparatus as shown in FIG. 5 include a decoded picture buffer (DPB) and a decoded buffer (DB).

FIG. 6 is a diagram conceptually illustrating a decoding process for multiple layers having different resolutions according to an embodiment of the present disclosure.

In the example of FIG. 6, high-level and low-level layers (or sequences) are obtained by encoding the same image at different resolutions, and video decoding may be performed with reference to such resolution characteristics, the same picture order count (POC) information, and the like during decoding. Further, the video decoding apparatus may decode a high-level layer using decoding information of a current picture based on pre-stored decoding information of a low-level layer and a decoded residual signal with respect to the current picture. Here, the decoding information of the low-level layer may include at least one of (i) decoding information in terms of syntax, such as block split information, a prediction mode, a prediction direction, a transformation kernel, a motion vector, a reference picture index, filter information (e.g., information on an in-loop filter, an interpolation filter, and the like), and/or a weight prediction parameter (e.g., a weight for weighted averaging of bidirectional reference blocks), (ii) pixel information of a decoded block having other characteristics (e.g., different resolution) of a position matching the current picture for decoding, and (iii) a residual signal for a reference picture. The position matching the current picture may be a picture of a low-level layer of the same POC or a picture (i.e., a reference picture) of a low-level layer referenced by the current picture.

Meanwhile, in order to obtain low-level decoding information and a residual signal, the video decoding apparatus may use at least one of (i) a method of using information obtained by parsing a bitstream transmitted from the video encoding apparatus and (ii) a method of using pixel information of a reconstructed image generated by parsing a bitstream transmitted from the video encoding apparatus and then decoding the parsed bitstream.

Hereinafter, in the description according to the present disclosure, it is assumed that a current picture includes a current block for decoding and is included in a high-level layer. It is assumed that a reference picture includes a reference block or a reference position to be referenced for decoding of the current block, and is included in a low-level layer.

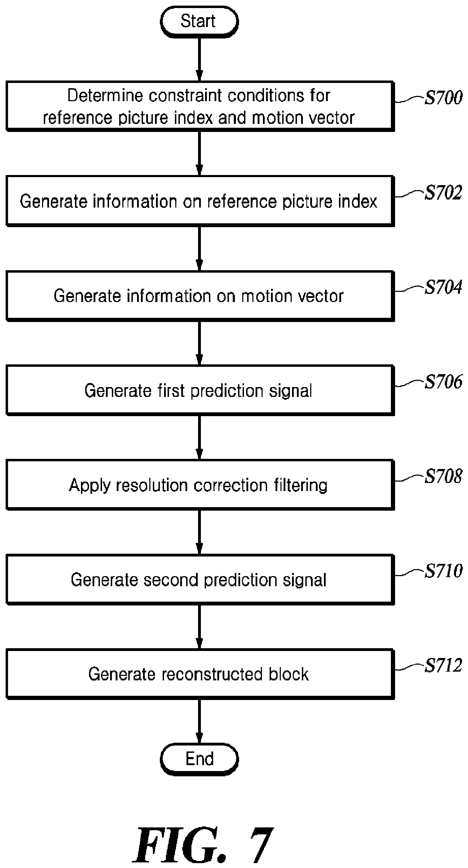

FIG. 7 is a schematic flowchart of a video decoding method using a reference picture having a different resolution according to an embodiment of the present disclosure.

The example of FIG. 7 illustrates a method of performing inter-prediction during a block-based decoding process based on a reference picture having a different resolution. After determining constraint conditions for reference picture indexes and motion vectors (S700), the video decoding apparatus generates information on the reference picture indexes (S702) and generates information on the motion vectors (S704). Here, the reference picture indexes and the motion vectors may be based on low-level decoding information as described above.

After generating a first reference picture based on the reference picture indexes, the video decoding apparatus generates a first prediction signal using the first reference picture (S706). In the process of generating the first prediction signal, a motion vector may be used.

When the resolution of a current block for decoding is different from the resolution of a reference picture, the video decoding apparatus may refer to the reference picture after applying resolution correction filtering to the reference picture. In other words, the video decoding apparatus generates a second reference picture by applying resolution correction filtering to the first reference picture having a different resolution from the current block (S708), and then generates a second prediction signal using the second reference picture (S710). In the process of generating the second prediction signal, a motion vector in consideration of the resolution difference may be used. An example method of generating the motion vector in consideration of the resolution difference, according to an embodiment of the present disclosure, is described below. Meanwhile, the second reference picture may be stored in a decoded picture buffer (DPB).

The video decoding apparatus selects one of the first prediction signal and the second prediction signal as a prediction signal and generates a reconstructed block by adding a residual signal with respect to the current block and the prediction signal (S712). Here, when an image having a different resolution is cropped and thus the first prediction signal is generated, the first prediction signal can be referred to without adjusting the resolution, and thus the video decoding apparatus may select the first prediction signal as a prediction signal.

Hereinafter, constraint conditions for reference picture indexes and motion vectors are described. When reference pictures having different resolutions are referred to, transmission of reference picture indexes or motion vectors may be omitted when pictures of the same POC of different layers are reference pictures. When the reference picture indexes are omitted, the video decoding apparatus may refer to a low-level layer of the same POC for a high-level layer. When the motion vectors are omitted, the video decoding apparatus may refer to a low-level layer picture in consideration of resolutions of a high-level layer picture and the low-level layer picture, which are in a reference relationship, and a corresponding positional relationship therebetween without information on the motion vectors for a high-level layer.

Alternatively, the video decoding apparatus may use a reference picture index and a motion vector of a low-level layer picture of the same POC as prediction values. When the reference picture index of the low-level layer picture is used as a prediction value, the video decoding apparatus may determine a reference picture index of a high-level layer picture by adding the difference value of the reference picture index to the reference picture index. Here, the reference picture index of the high-level layer picture may be limited to the reference picture index of the low-level layer. In other words, at the time of decoding a current block included in a high-level layer, a predicted value of a reference picture index with respect to a reference block included in the corresponding low-level layer is used as it is, and transmission of the difference value of the index may be omitted. When a motion vector of a low-level layer picture is used as a predicted value, the predicted value of the motion vector may be determined in consideration of the resolutions of a high-level layer picture and the low-level layer picture and a corresponding positional relationship therebetween.

Meanwhile, a motion vector for a reference picture of the current block may be limited to a specific value including 0. Here, the fact that the motion vector for the reference picture is 0 indicates that the same position as the position of the current block is referred to in the second reference picture obtained by applying resolution correction filtering to the first reference picture.

As described above, when reference picture indexes and motion vectors are limited, transmission of the reference picture indexes and the motion vectors may be omitted according to an agreement between the video encoding apparatus and the video decoding apparatus, and the video decoding apparatus may decode the current block using agreed upon values.

Meanwhile, even if transmission of motion vectors is omitted, a reference picture index and a motion vector of a low-level layer in which resolution correction is considered may be restored as motion information most suitable for a high-level layer based on decoder motion vector refinement (DMVR) performed by the video decoding apparatus. DMVR may be performed using reconstructed samples of previously decoded blocks around the current block. In general, when the decoding order is upper left to lower right, the surrounding reconstructed samples are composed of J (J being a natural number) sample lines on the upper and left sides. The video decoding apparatus may calculate errors between samples for DMVR and a reference picture of a filtered low-level layer to determine a position with the smallest error in the reference picture and determine a reference position of the current block using the determined position.

In another embodiment of the present disclosure, the video decoding apparatus may calculate a weighted average of motion vectors of the samples for DMVR and determine the same for a motion vector of the current block, as described above.

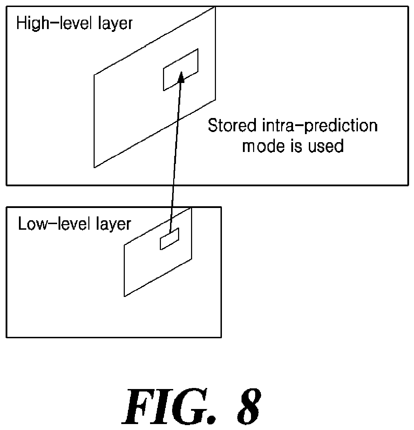

FIG. 8 is a diagram illustrating determination of an intra-prediction mode using a reference picture having a different resolution according to an embodiment of the present disclosure.

When a reference picture of a low-level layer is decoded in an intra-prediction mode, the video decoding apparatus according to the present embodiment may determine an intra-prediction mode of the current block using intra-prediction mode information pre-stored for the reference picture of the low-level layer. The video decoding apparatus may obtain information on a low-level layer picture in which the prediction-mode will be referred to, obtain information on a reference position (a position of a block to be referenced by the current block) from the reference picture of the low-level layer. The video decoding apparatus may then perform intra-prediction on the current block using intra-prediction mode information of the block corresponding to the reference position to generate a prediction signal. Here, the reference picture and the reference position may be based on low-level decoding information as described above. The video decoding apparatus may generate a reconstructed block by adding the prediction signal to a residual signal for the current block.

Meanwhile, the reference picture and the reference position of the low-level layer may be limited to specific values according to an agreement between the video encoding/decoding apparatus. A reference picture in a low-level layer with respect to the current picture of the video encoding/decoding apparatus may be limited to a picture of a specific index. Further, the reference position may be limited to a specific value including 0.

The fact that reference position information is 0 indicates that the same position as the position of the current block is referred to at the time of determining the position of a block whose prediction mode will be referred to in consideration of the resolutions of a reference picture and a current picture to be decoded and a corresponding positional relationship therebetween. Restricting a reference picture index indicates that only a picture of a low-level layer having the same POC as that of a high-level layer or having a specific temporal positional relationship is used for reference of an intra-prediction mode. When a limited reference picture index is a fixed value or the video decoding apparatus can determine a reference picture index according to an agreed upon method between the video encoding/decoding apparatus, transmission of reference position information of the intra-prediction mode, the reference picture index, the intra-prediction mode, and the like is omitted, and the video decoding apparatus may decode the current block using agreed upon values.

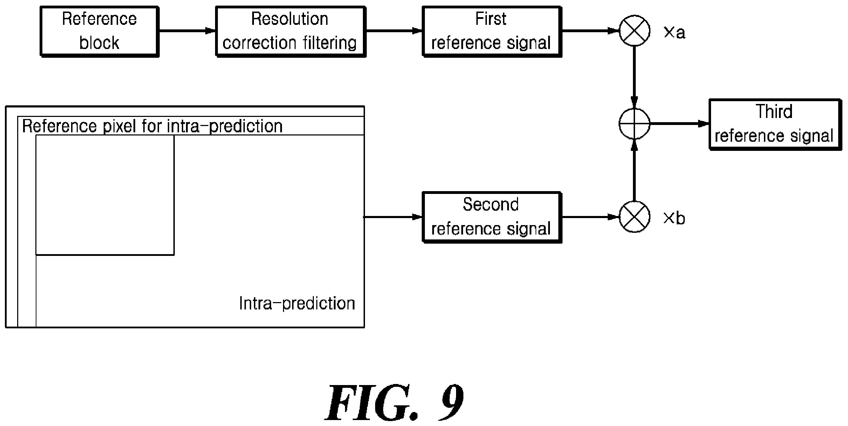

FIG. 9 is a diagram conceptually illustrating intra/inter mixed prediction using a reference picture having a different resolution according to an embodiment of the present disclosure.

The video decoding apparatus according to the present embodiment may decode the current block based on intra/inter mixed prediction. The video decoding apparatus may generate a third reference signal by weighted summing a first reference signal obtained by performing resolution correction filtering on a reference block of a low-level layer and a second reference signal intra-predicted using decoded reference pixels around the current block, and perform decoding with reference to at least one of these signals. Here, weights (a and b in the example of FIG. 9) for the first reference signal and the second reference signal may be determined using at least one of (i) a method of receiving the weights from the video encoding apparatus and using the same, (ii) a method of receiving and using indexes of a weight list, and (iii) a method of using fixed values according to an agreement between the video encoding/decoding apparatus.

In another embodiment of the present disclosure, when the prediction mode for the first reference signal is an intra-prediction mode, transmission of the intra-prediction mode for the second reference signal may be omitted according to an agreement between the video encoding/decoding apparatus, and the second reference signal may be predicted using the prediction mode of the first reference signal.

In another embodiment of the present disclosure, when a reference picture having a different resolution is used, a reference picture index and a motion vector may be omitted. Further, a reference picture for a current picture of the video encoding/decoding apparatus may be limited to a picture of a specific index. For example, when the relationship between the current picture and a reference picture is a layer relationship, and the current picture can refer to a low-level layer as a high-level layer, as in the example of FIG. 6, the video decoding apparatus may refer to a low-level layer picture of the same POC for a high-level layer picture. Further, the reference picture index of the high-level layer picture may be limited to the same POC picture of the low-level layer.

In another embodiment of the present disclosure, a motion vector for a reference block of the current block may be limited to a specific value including 0. The fact that the motion vector of the reference block is 0 indicates that the same position as the position of the current block is referred to in a second reference picture obtained by applying resolution correction filtering to a first reference picture.

As described above, when reference picture indexes and motion vectors are limited, transmission of the reference picture indexes and the motion vectors is omitted according to the agreement between the video encoding/decoding apparatus, and the video decoding apparatus may decode the current block using agreed upon values. That is, the video decoding apparatus may determine a co-located decoding block in the low-level layer as the first reference signal, predict the second reference signal using decoded reference pixels around the current block, perform weighted summing on the first reference signal and the second reference signal to generate the third reference signal, and perform decoding with reference to at least one of these signals.

Meanwhile, a weight for intra/inter mixed prediction may be transmitted from the video encoding apparatus to the decoding apparatus in the form of any one of an index of a list, a weight value, and a weighted prediction difference value. The video decoding apparatus may determine a weight for intra/inter mixed prediction of the current block by using one of an index, a weight value, and a weight prediction difference value, and generate a prediction signal for the current block. The weight may be transmitted in units of basic decoding blocks, decoding block groups, tiles, slices, subframes, subframe groups, frames, frame groups, or sequences, or in the form of a supplementary enhancement information (SEI) message, and the video decoding apparatus may apply a weight transmitted in a decoding unit belonging to the corresponding transmission unit according to the transmission unit.

Although the example of FIG. 9 shows a case where the resolution of the low-level layer is lower than the resolution of the high-level layer, in another embodiment of the present disclosure the same method may be used even when the resolution of the low-level layer is higher than the resolution of the high-level layer.

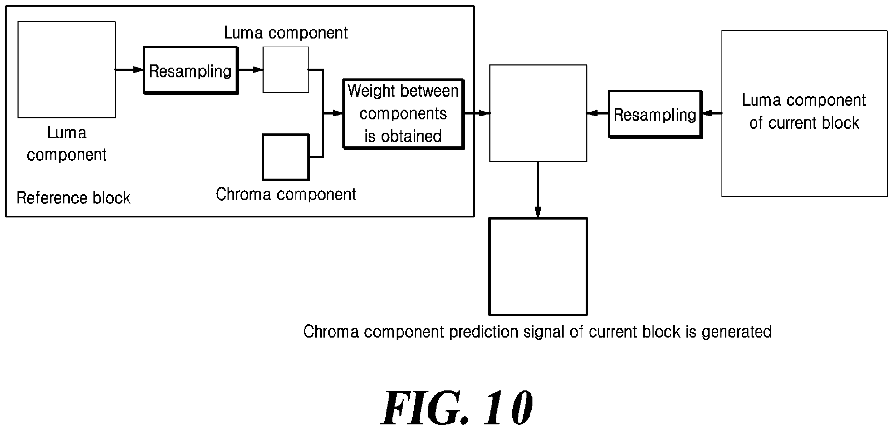

FIG. 10 is a diagram conceptually illustrating inter-component reference using a reference picture having a different resolution according to an embodiment of the present disclosure.

In the present embodiment, when a block at a reference position, i.e., a reference block is decoded according to inter-component reference, the video decoding apparatus may perform decoding using an inter-component weight and an offset based on the reference block during inter-component reference for the current block. Here, decoding according to inter-component reference means decoding the chroma component of the current block using the luma component, the inter-component weight, and the offset of the current block, as shown in the example of FIG. 10 and Equation 1.

【Equation 1】

$$pred_C(i,j) = \alpha \cdot rec_L(i,j) + \beta$$

Here, $rec_L(i,j)$ represents a decoded reconstructed pixel value in (i,j) luma sample in the current block, and $pred_C(i,j)$ represents a predicted value in a resampled (i,j) chroma sample in the current block. In addition, $\alpha$ and $\beta$ indicate a weight and an offset between components based on reference blocks. In the present embodiment, when the reference block is decoded according to inter-component reference and the current block is decoded using inter-component reference decoding, the video decoding apparatus may calculate a weight and an offset between components for the current block using pixel values of luma and chroma components of the reference block, as illustrated in FIG. 10. Alternatively, the weight and the offset between components may be calculated using only some pixels of the luma and chroma component blocks of the reference block or using resolution correctionfiltered pixel values.

In another embodiment of the present disclosure, when a reference picture having a different resolution is used, a reference picture and a reference position of a low-level layer may be limited to a specific value according to an agreement between the video encoding/decoding apparatus. Further, a reference picture for a current picture of the video encoding/decoding apparatus may be limited to a picture of a specific index. For example, as in the example of FIG. 6, when the relationship between a current picture and a reference picture is a layer relationship, and the current picture can refer to a low-level layer as a high-level layer, the video decoding apparatus may refer to a low-level layer picture of the same POC for a high-level layer picture. Further, the reference picture index of the high-level layer picture may be limited to the same POC picture of the low-level layer.

In another embodiment of the present disclosure, the reference position for the current block may be limited to a specific value including 0. The fact that reference position information is 0 indicates that the same position as the position of the current block is referred to at the time of determining the position of a block whose prediction mode will be referred to in consideration of the resolutions of the reference picture and the current picture to be decoded and a corresponding relationship therebetween.

As described above, when reference picture indexes and reference positions are limited, transmission of reference picture indexes and reference position information is omitted according to an agreement between the video encoding/decoding apparatus, and the video decoding apparatus may decode the current block using agreed upon values. In other words, when a co-located decoding block in the low-level layer is predicted by inter-component reference, the video decoding apparatus may predict a weight between components using pixel values of some or all of luma blocks and chroma blocks of the co-located decoding block of the low-level layer and perform inter-component prediction of the current block using the weight.

Although the example of FIG. 10 shows a case where the resolution of the low-level layer is lower than the resolution of the high-level layer, in another embodiment of the present disclosure the same method may be used even when the resolution of the low-level layer is higher than the resolution of the high-level layer.

In another embodiment of the present disclosure, when a reference picture having a different resolution is used, if matrix weighted intra prediction (MIP) is applied to a block at a reference position, i.e., a reference block, the video decoding apparatus may decode the current block using the MIP mode used by the reference block as the MIP mode of the current block. Here, since the MIP mode for the current block does not need to be transmitted, coding efficiency can be improved.

In another embodiment of the present disclosure, when a reference picture having a different resolution is used, a reference picture and a reference position of a low-level layer may be limited to a specific value according to an agreement between the video encoding/decoding apparatus. Further, a reference picture for a current picture of the video encoding/decoding apparatus may be limited to a picture of a specific index. For example, as in the example of FIG. 6, when the relationship between a current picture and a reference picture is a layer relationship, and the current picture can refer to a low-level layer as a high-level layer, the video decoding apparatus may refer to a low-level layer picture of the same POC for a high-level layer picture. Further, the reference picture index of the high-level layer picture may be limited to the same POC picture of the low-level layer.

In another embodiment of the present disclosure, the reference position for the current block may be limited to a specific value including 0. The fact that reference position information is 0 indicates that the same position as the position of the current block is referred to at the time of determining the position of a block whose prediction mode will be referred to in consideration of the resolutions of the reference picture and the current picture to be decoded and a corresponding relationship therebetween.

As described above, when reference picture indexes and reference positions are limited, transmission of reference picture indexes and reference position information is omitted according to an agreement between the video encoding/decoding apparatus, and the video decoding apparatus may decode the current block using agreed upon values.

Although the present embodiment shows a case where the resolution of the low-level layer is lower than the resolution of the high-level layer, in another embodiment of the present disclosure the same method may be used even when the resolution of the low-level layer is higher than the resolution of the high-level layer in another embodiment of the present disclosure.

All or some of the video decoding methods using a reference picture having a different resolution as described above can be used when a video encoding apparatus that performs encoding on multiple layers having different resolutions encodes a high-level layer.

Hereinafter, in the description according to the present disclosure, a current picture includes a current block for decoding. A reference picture includes a reference block to be referenced for decoding of the current block.

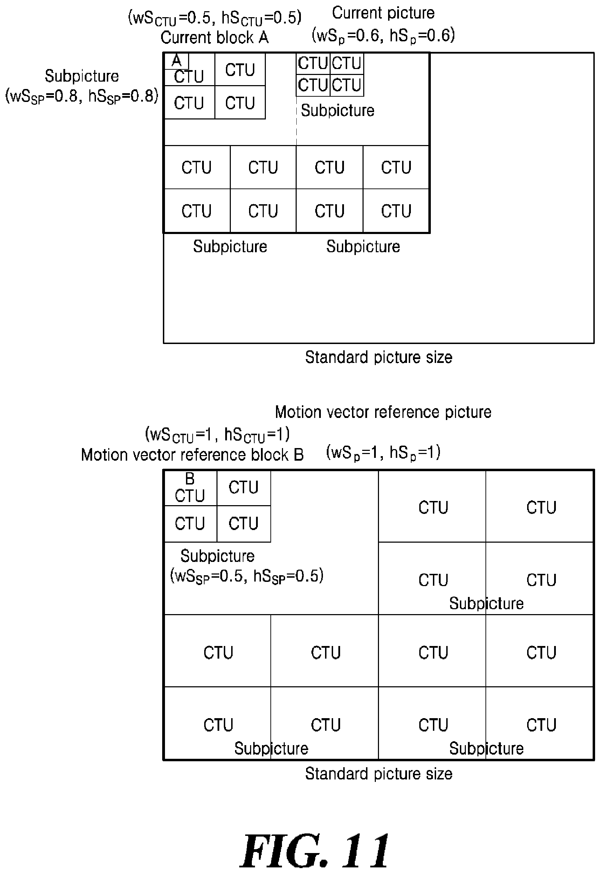

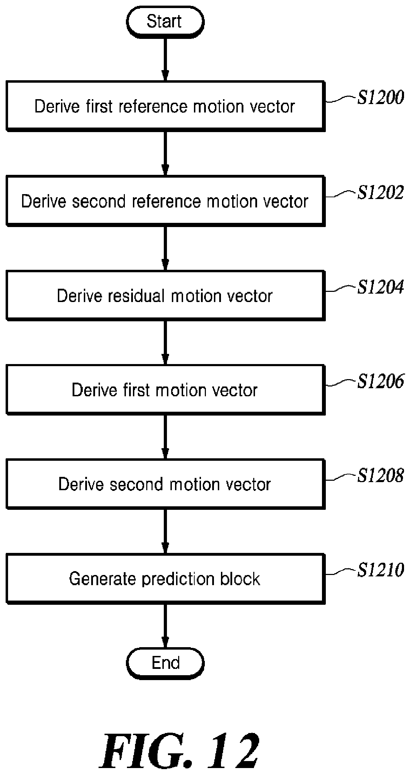

When motion vector prediction is performed from a reference picture having a resolution different from the current picture, the encoding efficiency of a motion vector may decrease due to a scale difference between a motion vector required for the current block and a predicted value of a motion vector based on a reference picture. Hereinafter, a method of predicting a motion vector for a current block by a video decoding apparatus from a region of a reference picture having a different resolution from the current block in consideration of the resolution difference is described with reference to FIGS. 11 and 12.

As described above, a picture may be hierarchically split into structures such as subpictures, CTUs, slices, tiles, and coding units. A picture may be split into a plurality of subpictures, and the video decoding apparatus may parse split information from higher-level information of SPS. A picture may be split into a plurality of CTUs, and split information may be parsed from higher-level information of PPS.

In addition, the video decoding apparatus may parse the start and end addresses of a subpicture, subpicture resampling scale values ($wS_{SP}$ and $hS_{SP}$) with respect to picture resolution, the width and height of a reference picture, etc. from the higher-level information of the SPS. In addition, a table in which a motion vector offset value matches a motion vector offset index may be parsed from the higher-level information of the SPS. The motion vector offset represents a difference between motion vectors.

The video decoding apparatus may parse the width and height of a reference picture, and resampling scale values ($wSp$ and $hSp$) of a picture with respect to the width and height of the reference picture from the higher-level information of the PPS. The width and height of the current picture may be derived by multiplying or dividing the width and height of the reference picture by $wSp$ and $hSp$, respectively. In addition, the number of CTUs, the width and height of CTUs, and resampling scale values ($wS_{CTU}$ and $hS_{CTU}$) of a CTU with respect to the resolution of a subpicture may be parsed from the higher-level information of the PPS. The width of a changed CTU may be derived by multiplying or dividing the width of a signaled CTU by $wS_{CTU}$. The height of the changed CTU may be derived by multiplying or dividing the height of the signaled CTU by the $hS_{CTU}$.

Further, the video decoding apparatus may parse the number of subpictures, subpicture indexes, the width and height of a subpicture, $wSsp$, $hSsp$, and the like from a picture header. The width of a changed CTU may be derived by multiplying or dividing the width of a signaled subpicture by $wS_{SP}$ or $wS_P$. The height of the changed CTU may be derived by multiplying or dividing the height of the signaled subpicture by $hS_{SP}$ or $hS_P$.

FIG. 11 is a diagram illustrating a hierarchical split structure of a current picture and a motion vector reference picture according to an embodiment of the present disclosure.

In the example of FIG. 11, a motion vector reference picture indicates a picture designated by a reference picture index with respect to a current block. The example of FIG. 11 shows scales for the widths and heights of each CTU including current block A and motion vector reference block B, subpicture, and picture. Scale differences between CTUs including current block A and motion vector reference block B may be scale differences ($wS_{diff\_curr\_ref}$ and $hS_{diff\_curr\_ref}$) between current block A and motion vector reference block B. $wS_{diff\_curr\_ref}$ and $hS_{diff\_curr\_ref}$ may be derived using a scaling value of current block A with respect to a reference picture and a scaling value of motion vector reference block B with respect to the reference picture. A scaling value for the width of a coding unit relative to the reference picture may be derived using $wS_{CTU} \times wS_{SP} \times wS_P$. A scaling value for the height of the coding unit relative to the reference picture may be derived using $hS_{CTU} \times hS_{SP} \times hS_P$.

FIG. 12 is a flowchart illustrating a method of deriving a motion vector and generating a prediction block using a reference picture having a different resolution according to an embodiment of the present disclosure.

The video decoding apparatus may derive a first reference motion vector by parsing indexes on a motion vector reference list (S1200). A construction method mode for the motion vector reference list may be parsed and used. The motion vector reference list may be composed of blocks at positions close to the same picture as a current block or another picture. Further, the motion vector reference list may be configured by sequentially updating decoded blocks.

The video decoding apparatus may derive a second reference motion vector by changing the scale of the first reference motion vector using a resolution difference between the current block and a motion vector reference block (S1202). A resolution scale difference between the current block and the motion vector reference block may be derived using a difference between the resolution scale of a CTU including the current block and the resolution scale of a CTU including the motion vector reference block. The scale of the resolution of the current block relative to a reference picture may be derived through multiplication or division using one or a plurality of $wS_{CTU}$, $wS_{SP}$, and $wS_P$. The scale of the resolution of the motion vector reference block relative to the reference block may be derived through multiplication or division using one or a plurality of $wS_{CTU}$, $wS_{SP}$, and $wS_P$ stored in a decoded buffer (DB). The resolution scale difference between the current block and the motion vector prediction block may be derived by multiplying or dividing the scale of the resolution of the current block relative to the reference picture by the scale of the resolution of the motion vector prediction block relative to the reference picture.

The video decoding apparatus may derive the second reference motion vector by multiplying or dividing the first reference motion vector by the derived resolution scale difference. Alternatively, the video decoding apparatus may derive the second reference motion vector by multiplying or dividing the first reference motion vector by the derived resolution scale difference and adding a motion vector offset to the result. Here, a motion vector offset index may be parsed or derived using the resolution scale difference. The video decoding apparatus may derive the motion vector offset corresponding to the motion vector offset index with reference to a motion vector offset table parsed from higher-level information.

Based on a prediction mode (e.g., merge mode or AMVP), the video decoding apparatus may selectively derive a residual motion vector (S1204). A value of the residual motion vector, a sign index of the residual motion vector, a size index of the residual motion vector, and the like may be parsed from higher-level information.

In addition, a table in which the sign and index of the residual motion vector are matched may be parsed from higher-level information or CTU level information. The video decoding apparatus may derive the sign of the residual motion vector by using the parsed index and the matching table. In addition, a table in which the residual motion vector size and index are matched may be parsed from the higher-level information or the CTU level information. The video decoding apparatus may derive the size of the residual motion vector by using the parsed index and the matching table.

The size of the second residual motion vector may be derived by multiplying or dividing the derived size of the residual motion vector by one or more of $wS_{CTU}$, $wS_{SP}$, and $wS_P$. The video decoding apparatus may generate the residual motion vector by using the sign of the residual motion vector, the size of the residual motion vector, or the size of the second residual motion vector. When the residual motion vector is derived, the video decoding apparatus adds the residual motion vector to the reference motion vector to derive a motion vector.

A residual motion vector may be derived without performing the second reference motion vector derivation process according to the prediction mode. The video decoding apparatus may derive a first motion vector by adding the first reference motion vector to the residual motion vector (S1206). Further, the video decoding apparatus may generate a second motion vector by multiplying or dividing the first motion vector by a resolution scale parameter (S 1208).

On the other hand, when the residual motion vector is not derived, the video decoding apparatus may designate the second reference motion vector as a motion vector.

The video decoding apparatus may generate a prediction block using a resolution scale difference between the current block and a prediction block (S1210). The resolution scales of the current block and the prediction block may be calculated using $wS_{CTU}$, $wS_{SP}$, or $wS_P$ corresponding to each block. The video decoding apparatus may derive a scale difference between the current block and the prediction block by multiplying or dividing the resolution scale of the current block by the resolution scale of the prediction block. The resolution of a reference block may be resampled using the derived scale difference such that the resolution is changed to be the same as the resolution of the current block. The resampled reference block may be used as a first prediction block.

In a prediction mode using two or more pieces of motion vector information, the video decoding apparatus may generate a plurality of prediction blocks by performing the process illustrated in FIG. 12 a plurality of times, and then weighted-average the generated prediction blocks to generate a second prediction block. A weight for each prediction block used in the weighted averaging process may be set to the same value, parsed, derived based on a temporal/spatial distance, or derived based on a scale difference from the current block.

When block decoding is completed, restored sample values may be stored in a DPB, and higher-level information, motion vectors, a picture split structure, $wS_{CTU}$, wSsp, wSp, etc. may be stored in a DB. Memory capacity required to store sample values in the DPB may be equal to $N \times M \times c$ (M, N, and c being natural numbers).

Here, N×M is a common divisor of the widths of a CTU, a subpicture, or a picture, and c is the number of CTUs, subpictures or pictures. In addition, when the number of CTUs, subpictures or pictures currently stored in the DPB is d (d being a natural number), a reconstructed CTU, subpicture or picture may be stored in the DPB if d is less than or equal to c.

As described above, according to the present embodiment, it is possible to improve encoding/decoding efficiency by providing a method of performing inter-prediction or intra-prediction on a current picture in consideration of the resolution of a reference picture in video encoding and decoding using a reference picture having a different resolution.

Furthermore, according to the present embodiment, it is possible to improve encoding/decoding efficiency by providing a method of decoding a motion vector with reference to a motion vector of a reference picture having a different resolution from the current picture in inter-prediction.

Although it is described that processes are sequentially executed in each flowchart according to the present embodiment, the present disclosure is not limited thereto. In other words, since the order of processes of a flowchart may be changed or one or more processes may be executed in parallel, flowcharts are not limited to a time-series order.

Various functions or methods described in the present embodiment may be implemented as instructions that can be read and executed by one or more processors and stored in a non-transitory recording medium. The non-transitory recording medium includes, for example, all kinds of recording apparatus in which data is stored in a form readable by a computer system. For example, the non-transitory recording medium includes storage media such as an erasable programmable read only memory (EPROM), a flash drive, an optical drive, a magnetic hard drive, and a solid state drive (SSD).

Although embodiments have been described for illustrative purposes, those having ordinary skill in the art should appreciate that and various modifications and changes are possible, without departing from the idea and scope of the embodiments. Embodiments have been described for the sake of brevity and clarity. Accordingly, one of ordinary skill should understand that the scope of the embodiments is not limited by the embodiments explicitly described above but is inclusive of the claims and equivalents thereto.

**Claims**

1. A video decoding method for a current block in a current picture included in a high-level layer, performed by a video decoding apparatus based on a reference picture included in a low-level layer and having a different resolution, the video decoding method comprising:

    obtaining a prediction mode for the current block;
    obtaining a decoded residual signal and decoding information for the current block, wherein the decoding information includes a reference picture index and a motion vector for the reference picture when the prediction mode is inter-prediction and includes the reference picture and a reference position in the reference picture when the prediction mode is intra-prediction;
    generating a prediction signal for the current block based on the decoding information when the prediction mode is the inter-prediction; and
    generating a reconstructed block by adding the prediction signal to the residual signal,
    wherein, when the prediction mode is the inter-prediction, filtering for correcting the different resolution is applied to a reference block included in the reference picture such that the different resolution matches a resolution of the current block.

2. The video decoding method of claim 1, wherein the inter-prediction comprises:

    generating a first reference picture based on the reference picture index; and
    generating a second reference picture by applying the filtering to the first reference picture, and generating the prediction signal for the current block using a motion vector in consideration of the different resolution and the second reference picture.

3. The video decoding method of claim 2, wherein the inter-prediction comprises referring to a picture of a same picture order count (POC) included in the low-level layer as the first reference picture when transmission of the reference picture index is omitted.

4. The video decoding method of claim 2, wherein the inter-prediction comprises generating the prediction signal for the current block based on resolutions of the current block and the reference picture and a corresponding positional relationship between the current block and the reference picture when transmission of the motion vector is omitted.

5. The video decoding method of claim 4, wherein the inter-prediction comprises generating a refined motion vector for the current block using decoder motion vector refinement (DMVR) based on a motion vector in consideration of resolution correction, wherein the DMVR is performed using previously decoded samples around the current block.

6. The video decoding method of claim 5, wherein the DMVR calculates errors between the previously decoded samples and the second reference picture and determines a reference position for the current block based on a position having a smallest error in the second reference picture.

7. The video decoding method of claim 1, wherein the inter-prediction comprises generating a reference picture index and a motion vector for the current block using a reference picture index and a motion vector of a picture having a same POC as the current picture among pictures in the low-level layer as predicted values.

8. The video decoding method of claim 1, wherein the prediction mode is intra-prediction, and wherein the intra-prediction comprises generating a prediction signal for the current block using intra-prediction mode information of a block at the reference position.

9. The video decoding method of claim 8, wherein the intra-prediction comprises:

setting a same position in the reference picture as the position of the current block as a reference position, and
generating the prediction signal for the current block using the intra-prediction mode information of the block at the reference position.

10. The video decoding method of claim 1, wherein the current block is decoded based on intra/inter mixed prediction, and
wherein the mixed prediction comprises:

generating a first reference signal by applying the filtering to the reference block;
predicting a second reference signal using decoded reference pixels around the current block; and
generating a prediction signal of the current block by weighted summing the first reference signal and the second reference signal based on a preset weight.

11. The video decoding method of claim 8, wherein the intra-prediction comprises generating a prediction signal for pixel values of a chroma component of the current block using a weight and an offset between components of the block at the reference position, and pixel values of a luma component of the current block when the block at the reference position is decoded according to inter-component reference.

12. The video decoding method of claim 11, wherein the intra-prediction comprises calculating the weight and the offset between components using pixel values of luma and chroma components for all or part of the block at the reference position or pixel values of the block at the reference position to which resolution correction filtering is applied.

13. A video encoding method for a current block included in a high-level layer, performed by a video encoding apparatus based on a reference picture included in a low-level layer and having a different resolution, the video encoding method comprising:

generating a prediction mode for the current block;
obtaining encoding information on the current block, wherein the encoding information includes a reference picture index and a motion vector for the reference picture when the prediction mode is inter-prediction and includes the reference picture and a reference position in the reference picture when the prediction mode is intra-prediction;
generating a prediction signal for the current block based on the encoding information when the prediction mode is the inter-prediction; and
generating a residual signal by subtracting the prediction signal from the current block, wherein, when the inter-prediction is used, filtering for correcting the different resolution is applied to a reference block included in the reference picture such that the different resolution matches a resolution of the current block.

14. The video encoding method of claim 13, wherein the inter-prediction comprises:

generating a first reference picture from the reference picture based on the reference picture index; and
generating a second reference picture by applying the filtering to the first reference picture, and then generating the prediction signal for the current block using a motion vector in consideration of the different resolution and the second reference picture.

15. The video encoding method of claim 13, wherein the prediction mode is the intra-prediction,
wherein the intra-prediction comprises generating the prediction signal for the current block using intra-prediction mode information of a block at the reference position.

**FIG. 1**

FIG. 2

FIG. 3A

0 : Planar
1 : DC

## FIG. 3B

| AL | | | | | | A | AR |

| L |
| BL |

## FIG. 4

**FIG. 5**

POC: Picture Order Count

**FIG. 6**

Start

Determine constraint conditions for
reference picture index and motion vector —— *S700*

Generate information on reference picture index —— *S702*

Generate information on motion vector —— *S704*

Generate first prediction signal —— *S706*

Apply resolution correction filtering —— *S708*

Generate second prediction signal —— *S710*

Generate reconstructed block —— *S712*

End

# *FIG. 7*

High-level layer

Stored intra-prediction
mode is used

Low-level layer

# FIG. 8

**FIG. 9**

EP 4 090 027 A1

Chroma component prediction signal of current block is generated

**FIG. 10**

EP 4 090 027 A1

$(wS_{CTU}=0.5, hS_{CTU}=0.5)$  Current picture
Current block A   $(wS_p=0.6, hS_p=0.6)$

Subpicture
$(wS_{SP}=0.8, hS_{SP}=0.8)$

| A CTU | CTU | CTU | CTU |
| CTU | CTU | CTU | CTU |

Subpicture

| CTU | CTU | CTU | CTU |
| CTU | CTU | CTU | CTU |

Subpicture   Subpicture

Standard picture size

Motion vector reference picture

$(wS_{CTU}=1, hS_{CTU}=1)$
Motion vector reference block B   $(wS_p=1, hS_p=1)$

| B CTU | CTU |
| CTU | CTU |

Subpicture
$(wS_{SP}=0.5, hS_{SP}=0.5)$

| CTU | CTU |
| CTU | CTU |

Subpicture

| CTU | CTU | CTU | CTU |
| CTU | CTU | CTU | CTU |

Subpicture   Subpicture

Standard picture size

# FIG. 11

27

Start

Derive first reference motion vector — S1200

Derive second reference motion vector — S1202

Derive residual motion vector — S1204

Derive first motion vector — S1206

Derive second motion vector — S1208

Generate prediction block — S1210

End

# FIG. 12

## INTERNATIONAL SEARCH REPORT

| International application No. |
| --- |
| **PCT/KR2021/000109** |

| A. | CLASSIFICATION OF SUBJECT MATTER |
| --- | --- |

**H04N 19/53**(2014.01)i; **H04N 19/573**(2014.01)i; **H04N 19/105**(2014.01)i; **H04N 19/82**(2014.01)i; **H04N 19/70**(2014.01)i; **H04N 19/176**(2014.01)i

According to International Patent Classification (IPC) or to both national classification and IPC

| B. | FIELDS SEARCHED |
| --- | --- |

Minimum documentation searched (classification system followed by classification symbols)

H04N 19/53(2014.01); H04N 19/107(2014.01); H04N 19/109(2014.01); H04N 19/139(2014.01); H04N 19/154(2014.01); H04N 19/172(2014.01); H04N 19/176(2014.01); H04N 19/30(2014.01); H04N 19/51(2014.01); H04N 19/82(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 인터 (inter), 인트라 (intra), 해상도 (resolution), 예측 (prediction), 필터링 (filtering)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y<br>A | KR 10-2018-0107687 A (SK TELECOM CO., LTD.) 02 October 2018 (2018-10-02)<br>See paragraphs [0016]-[0017] and [0182]-[0189]. | 1,2,7-9,13-15<br>3-6,10-12 |
| Y | KR 10-1441874 B1 (SK TELECOM CO., LTD.) 25 September 2014 (2014-09-25)<br>See paragraphs [0035]-[0073]. | 1,2,7-9,13-15 |
| A | KR 10-2016-0108430 A (QUALCOMM INCORPORATED) 19 September 2016 (2016-09-19)<br>See claims 1-8. | 1-15 |
| A | US 2019-0191187 A1 (INTERDIGITAL VC HOLDINGS, INC.) 20 June 2019 (2019-06-20)<br>See claims 1-6. | 1-15 |
| A | JP 2018-050256 A (NIPPON TELEGR & TELEPH CORP. <NTT>) 29 March 2018 (2018-03-29)<br>See claims 1-10. | 1-15 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **13 April 2021** | **15 April 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

| International application No. |
|---|
| **PCT/KR2021/000109** |

| Patent document cited in search report | | | Publication date (day/month/year) | Patent family member(s) | | | Publication date (day/month/year) |
|---|---|---|---|---|---|---|---|
| KR | 10-2018-0107687 | A | 02 October 2018 | WO | 2019-013434 | A1 | 17 January 2019 |
| KR | 10-1441874 | B1 | 25 September 2014 | KR | 10-1356613 | B1 | 06 February 2014 |
| | | | | KR | 10-1377530 | B1 | 27 March 2014 |
| | | | | KR | 10-1449696 | B1 | 20 October 2014 |
| | | | | KR | 10-1597278 | B1 | 25 February 2016 |
| | | | | KR | 10-1678968 | B1 | 25 November 2016 |
| | | | | KR | 10-2011-0020212 | A | 02 March 2011 |
| | | | | KR | 10-2011-0020213 | A | 02 March 2011 |
| | | | | KR | 10-2011-0020214 | A | 02 March 2011 |
| | | | | KR | 10-2011-0020215 | A | 02 March 2011 |
| | | | | KR | 10-2014-0075661 | A | 19 June 2014 |
| | | | | US | 10659804 | B2 | 19 May 2020 |
| | | | | US | 2012-0207220 | A1 | 16 August 2012 |
| | | | | US | 2012-0219063 | A1 | 30 August 2012 |
| | | | | US | 2012-0224635 | A1 | 06 September 2012 |
| | | | | US | 2012-0314771 | A1 | 13 December 2012 |
| | | | | US | 2018-0242011 | A1 | 23 August 2018 |
| | | | | US | 2020-0068215 | A1 | 27 February 2020 |
| | | | | US | 2020-0296408 | A1 | 17 September 2020 |
| | | | | US | 9154806 | B2 | 06 October 2015 |
| | | | | US | 9674546 | B2 | 06 June 2017 |
| | | | | US | 9930358 | B2 | 27 March 2018 |
| | | | | WO | 2011-021911 | A2 | 24 February 2011 |
| | | | | WO | 2011-021911 | A3 | 09 June 2011 |
| | | | | WO | 2011-021912 | A2 | 24 February 2011 |
| | | | | WO | 2011-021912 | A3 | 09 June 2011 |
| | | | | WO | 2011-021913 | A2 | 24 February 2011 |
| | | | | WO | 2011-021913 | A3 | 09 June 2011 |
| | | | | WO | 2011-021914 | A2 | 24 February 2011 |
| | | | | WO | 2011-021914 | A3 | 16 June 2011 |
| | | | | WO | 2011-021915 | A2 | 24 February 2011 |
| | | | | WO | 2011-021915 | A3 | 16 June 2011 |
| KR | 10-2016-0108430 | A | 19 September 2016 | CA | 2933206 | A1 | 23 July 2015 |
| | | | | CN | 105900431 | A | 24 August 2016 |
| | | | | CN | 105900431 | B | 12 March 2019 |
| | | | | EP | 3095241 | A1 | 23 November 2016 |
| | | | | JP | 2017-503433 | A | 26 January 2017 |
| | | | | JP | 6453350 | B2 | 16 January 2019 |
| | | | | US | 2015-0201204 | A1 | 16 July 2015 |
| | | | | US | 9906804 | B2 | 27 February 2018 |
| | | | | WO | 2015-109238 | A1 | 23 July 2015 |
| US | 2019-0191187 | A1 | 20 June 2019 | CN | 109716764 | A | 03 May 2019 |
| | | | | EP | 3280143 | A1 | 07 February 2018 |
| | | | | EP | 3494696 | A1 | 12 June 2019 |
| | | | | JP | 2019-528607 | A | 10 October 2019 |
| | | | | KR | 10-2019-0031558 | A | 26 March 2019 |
| | | | | WO | 2018-024425 | A1 | 08 February 2018 |
| JP | 2018-050256 | A | 29 March 2018 | JP | 6491628 | B2 | 27 March 2019 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2021000109 W
- KR 1020200001674
- KR 1020200001675
- KR 1020210001214